(19) Europäisches Patentamt
European Patent Office
Office européen des brevets

(11) **EP 2 367 708 B1**

(12) **EUROPEAN PATENT SPECIFICATION**

(45) Date of publication and mention
of the grant of the patent:
**30.07.2014 Bulletin 2014/31**

(51) Int Cl.:
***B60R 1/08*** (2006.01)

(21) Application number: **09759944.3**

(22) Date of filing: **24.11.2009**

(86) International application number:
**PCT/EP2009/065776**

(87) International publication number:
**WO 2010/063620 (10.06.2010 Gazette 2010/23)**

(54) **REFLECTING DEVICE WITH WIDE VISION ANGLE, REDUCED DISTORTION AND ANAMORPHOSIS AND REDUCED DOUBLING OF REFLECTED IMAGES, PARTICULARLY FOR VEHICLES**

REFLEXIONSVORRICHTUNG MIT WEITEM SICHTWINKEL,REDUZIERTER VERZERRUNG UND& xA;ANAMORPHOSE UND REDUZIERTER VERDOPPLUNG REFLEKTIERTER BILDER, INSBESONDERE& xA;FÜR FAHRZEUGE

DISPOSITIF RÉFLÉCHISSANT AVEC GRAND ANGLE DE VISION, DISTORSION ET ANAMORPHOSE RÉDUITES ET DOUBLAGE RÉDUIT D'IMAGES RÉFLÉCHIES, EN PARTICULIER POUR VÉHICULES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **02.12.2008 IT MI20082132**

(43) Date of publication of application:
**28.09.2011 Bulletin 2011/39**

(73) Proprietor: **Wide Eye S.R.L.**
**24121 Bergamo (IT)**

(72) Inventors:
• **LOCATELLI, Mario**
**I-24030 Mozzo (IT)**

• **ZUIN, Andrea Enrico**
**I-20017 Rho (IT)**

(74) Representative: **Modiano, Micaela Nadia**
**Modiano & Partners (IT)**
**Via Meravigli, 16**
**20123 Milano (IT)**

(56) References cited:
**EP-A1- 1 759 925        WO-A1-94/03344
DE-A1-102007 010 824     US-A- 5 005 962
US-A1- 2008 100 938      US-B1- 7 025 469**

## Description

### Technical Field

The present invention relates to a reflecting device with wide vision angle, reduced distortion and anamorphosis and reduced doubling of reflected images, used mainly as an external rear-view mirror for road and off-road vehicles.

### Background Art

External reflecting devices for road and off-road vehicles, known more commonly as rear-view mirrors, are mounted laterally on either sides of the vehicle and are constituted generally by a flat reflecting surface or by a convex spherical surface.

The directives for type-approval of rear-view mirrors that are in force in the various countries, if they allow the use of convex reflecting surfaces (for example European directive 2003/97/EC), set a minimum value of the radius of curvature in order to prevent the image generated by the device from being excessively small and having an excessively high level of distortion.

In a spherical mirror, distortion in fact depends directly on the value of the radius of curvature; since the radius is chosen according to the dimensions of the mirror and to the field that must be viewed, it is not possible to correct in any way distortion, much less anamorphosis, i.e., the transformation to which an image is subjected when a geometric deformation occurs for which the ratio between the horizontal dimension and the vertical dimension is not constant.

The value of the minimum radius depends on the function performed by the mirror and on the directive itself; in any case, these reflecting devices, taking into account their usual dimensions, have a limited field of vision, approximately 20°, and accordingly have a rather wide blind spot, which often does not allow to show any approaching vehicles.

This is a danger factor and can induce the driver to perform maneuvers that are deemed safe on the basis of the images reflected by the device and instead can lead to collisions with other vehicles that cannot be seen by the driver if they have already entered the blind spot of the rear-view mirror.

In order to obviate this drawback, reflecting devices have been studied and produced which have a greater field of vision than the previously described rear-view mirrors.

These known reflecting devices are provided by arranging to the side of a first flat or spherical main surface a second spherical or aspherical convex surface which is highly curved.

In this manner, the overall field of vision of the reflecting device can increase to approximately 35°, but the image reflected by the second added spherical or aspherical surface of the mirror is distorted and much smaller than the one reflected by the first main flat or spherical surface.

The second added surface generally has an extension equal to one third of the total width of the mirror and occupies the outermost portion of said mirror.

These reflecting devices reduce the extent of the blind spot but are not free from drawbacks: the image of an overtaking car, when reflected at the transition between the main surface and the second surface, undergoes a sudden reduction in size and a consequent increase in distortion that is unpleasant for the driver.

Moreover, the apparent speed of the overtaking car also decreases greatly when the demarkation line between the two regions is crossed, and an evident and distinct discontinuity is also caused by the demarkation of the two surfaces and by the mandatory vertical dashed line.

All this can lead to errors in judging the distance and speed of the viewed vehicle, reckoning it to be more distant and slower than it actually is.

Another drawback that is particularly unpleasant depends on the fact that at the transition between the two portions of surfaces of a mirror, installed for example on the driver's side, the image that forms in the left eye is reflected in the main portion of the mirror while the image that is formed in the right eye is reflected in the secondary portion, which is strongly curved. Accordingly, the dimensions of the two images are significantly different and the human brain is unable to merge them into a single three-dimensional image.

In conclusion, due to the steep gradient of the distortion and due to the reduction of the dimensions of the image that occurs at the transition, it is not possible to perceive distinctly a single image.

Not only is it unpleasant to see an image that is confused and not immediately identifiable, especially in conditions of less than optimum visibility, but this can also be dangerous, because it can make the driver dwell too long on the image produced by the rear-view mirror, in order to decipher it correctly, distracting him from controlling the vehicles that precede him.

A further evolution of reflecting devices is described in US patent 7,025,469.

The cited patent describes a rear-view mirror with a wide viewing angle and formation of a single low-distortion image, which comprises a monolithic body made of transparent plastic material that is formed by an external surface which faces the objects to be detected and an internal surface that lies behind the first one, respectively, the first one being flat and refractive and the second one being convex and reflecting.

In particular, the internal surface is aspherical and is generated by the rotation of a noncircular profile about an axis that is parallel to the longitudinal axis of the vehicle on which the rear-view mirror will be installed.

The monolithic body described in the cited patent is generally provided by means of a mold, of which the inserts that shape the surfaces of the mirror are obtained by turning and subsequent polishing of the surfaces, so as to obtain components with optical characteristics.

This type of rear-view mirror allows to extend the field of vision up to 60°, an angle which is more than sufficient to have a good rear view, but it is necessary to apply to the outer surface an antireflective treatment in order to eliminate or reduce as much as possible the image formed by direct reflection on the outer surface. It is in fact known that light, when it strikes a transparent surface, is partly reflected and partly refracted. In the absence of an antireflective treatment, the percentage of light that is reflected with respect to the light that is incident depends on the angle of incidence and on the refractive index of the medium; if the light is normally incident to the surface, i.e., has a nil angle of incidence, the reflected energy is minimal and is equal to approximately 4% of the incident energy, for a refractive index of approximately 1.5.

The reflected energy increases as the angle of incidence increases. Since the outer surface is flat, the unwanted image that is formed by the first reflection has the same dimensions as the object; flat mirrors in fact work with unit magnification.

Therefore, the image that is formed by the first reflection is larger than the main image that is formed by reflection on the curved internal surface. For this reason, the eyes of the driver perceive two distinct images, which especially at night make the mirror unusable.

The mirror described in US patent 7,025,469 therefore allows to increase the viewed field and to form an image with reduced distortion, but requires an antireflective treatment on the outer surface which increases production costs significantly.

This treatment in fact must have high efficiency, because it must be able to render invisible the lights of the headlights of cars during night driving; in view of the high intensity of the lights of headlights, a treatment with these characteristics is expensive to produce.

EP 1 759 925 discloses a partial curved on-vehicle rear view mirror having a center main portion formed in a flat surface, and an outer portion formed in an outward convex surface having a lower side portion and an inner convex surface portion, for expanding the rear view to the sides and to the lower portion.

## Disclosure of the Invention

The aim of the present invention is to eliminate the drawbacks noted above, providing a reflecting device, particularly for vehicles, that allows a wide field of vision both in the vertical extension of the field of vision and in a region located laterally to the vehicle on which it is installed, eliminating the so-called blind spot, offering a larger field of vision in the road surface cone at a distance from the mirror that is particularly useful in maneuvers from a stationary condition.

Within the scope of this aim, an object of the present invention is to provide a reflecting device that does not deform the reflected images detectably and forms a single continuous image.

Another object of the present invention is to provide a reflecting device with better optical performance than the spherical or aspherical mirrors currently in production on the basis of the geometric limits set by the type-approval directives in force, reducing distortion and anamorphosis and/or increasing the viewed field.

Another object of the present invention is to provide a reflecting device that has optical surfaces which lack rotational symmetry, so as to be able to optimize the performance of the mirror simultaneously in the horizontal and vertical directions, independently of each other.

Another object of the present invention is to provide a reflecting device that allows the driver of the vehicle to have a safe perception of the distance of the objects that he sees reflected, even if said objects are moving.

Another object of the present invention is to provide a reflecting device for which the production process can benefit from the progress made by technologies for transforming transparent plastic materials and from the better optical and mechanical properties of said materials, such as for example higher refractive indexes, greater transparency and greater resistance to abrasion and to atmospheric agents, especially in the construction of sight protection and image correction devices, such as for example visors for helmets and glasses.

Another object of the present invention is to provide a reflecting device with a reduced front area in order to reduce aerodynamic drag with respect to that of current rear-view mirrors, which necessarily have become larger indeed to allow to attain the field of vision required by the recent revision of the statutory provisions, which are now applied to all new vehicle models.

Another object of the present invention is to ensure that even in the absence of an antireflective treatment on the outer surface, the main image and the secondary image formed by the unwanted reflection on the outer surface merge in the best manner, so that the driver perceives a single image.

Not least, an object of the invention is to provide a reflecting device with low production costs.

In accordance with the invention, there is provided a reflecting device as defined in the appended claims.

## Brief description of the drawings

Further characteristics and advantages of the present invention will become apparent from the description of a preferred but not exclusive embodiment of a reflecting device with wide viewing angle, reduced distortion and anamorphosis and reduced doubling of the reflected images, particularly for vehicles, according to the invention, illustrated by way of non-limiting example in the accompanying drawings, wherein:

Figure 1 is a front elevation view of an embodiment of a reflecting device according to the present invention;
Figure 2 is a perspective view of the monolithic body of the reflecting device shown in Figure 1;
Figure 3 is a schematic view of the external surface which illustrates the tracing of a ray that reflects on the external surface and passes through the center of the eye of the driver;
Figure 4 is a schematic view of the series of points that are equidistant in the horizontal and vertical direction;
Figure 5 is a schematic view of the monolithic body, shown partially in cross-section, which illustrates a ray that starts from the object point A, is reflected on the mirror in the point P, and reaches the eyes of the driver;

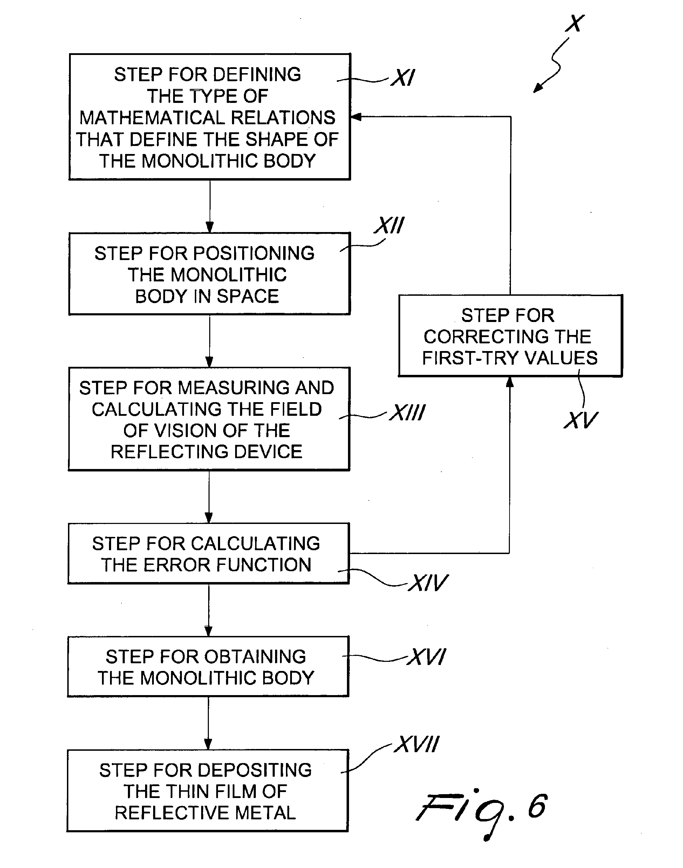

Figure 6 is a block diagram of a method for obtaining the monolithic body shown in Figure 2 according to the present invention.

## Ways of carrying out the Invention

With reference to the figures, the reflecting device or rear-view mirror, generally designated by the reference numeral 1, comprises a frame 2 and a support 3 by means of which it is possible to install the reflecting device 1 on the car.

The reflecting device 1, which will be described hereinafter with reference to its main surfaces with an image reflection function, comprises a single monolithic body 4 made of transparent plastic material, such as for example thermoplastic materials with high-level light transmission such as Nylon, PMMA (polymethyl methacrylate) and polycarbonate, as well as thermosetting materials, such as for example CR39 (a polymer developed by the Columbia Chemical Co., located in Columbia, South Carolina, USA, which belongs to the class of polyesters). All the cited plastic materials ensure advantageous optical and mechanical properties with respect to glass, with the same refractive index and low chromatic dispersion but with a specific gravity equal to approximately half that of glass and with an impact resistance that is at least four times greater.

These materials are known and used in the optical-ophthalmological sectors, in the sector of protection against the sun, of eyesight protection and of individual protective devices, such as the visors of helmets for motorcyclists.

These materials can be processed by means of a method for molding by pressure injection-compression (for thermoplastic materials) and casting (for thermosetting materials), which ensures a high surface finish and geometric stability.

The monolithic body 4 comprises a refractive external surface 5, which faces the objects to be detected, and an internal reflecting surface 6, which is opposite with respect to the external surface 5.

According to the invention, the internal surface and the external surface 5 are preferably anamorphic surfaces which are non-revolution surfaces, i.e., surfaces by means of which the mirror can have a different magnification in the horizontal direction with respect to the magnification in the vertical direction, with the optical axis in common.

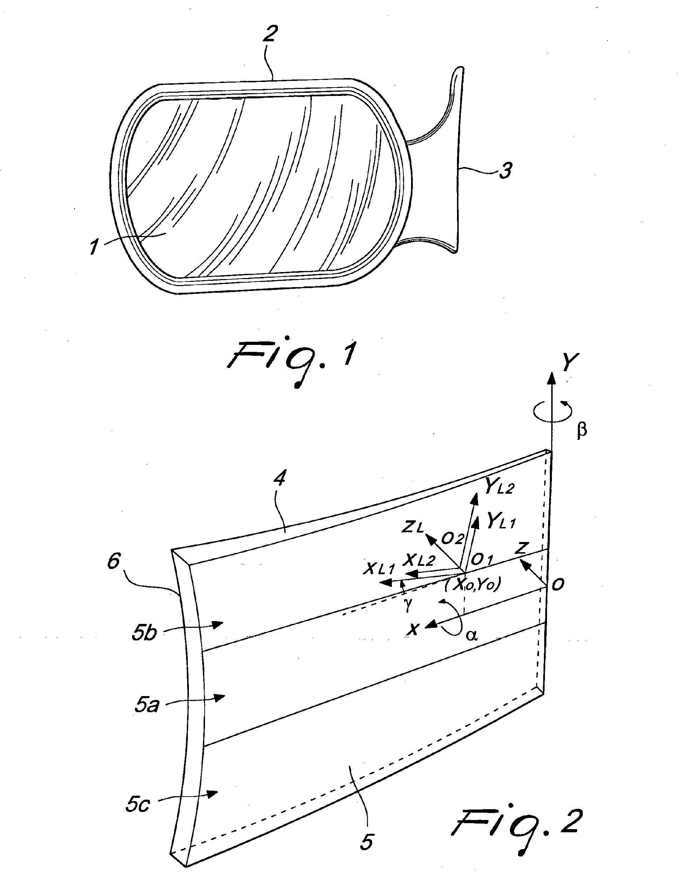

More precisely, as shown in Figure 2, the optical axis of the surfaces 5 and 6 coincides with the axis $Z_L$, whose position is identified by the coordinates $X_0$ and $Y_0$ of the vertex of the first external surface 5 with respect to a reference system that is coupled to the frame 2.

The surfaces 5 and 6 are defined by equations which reference respectively local reference systems $O_1$, $X_{L1}$, $Y_{L1}$, and $Z_L$ and $O_2$, $X_{L2}$, $Y_{L2}$ and $Z_L$, which are translated and rotated through an angle $\gamma$ with respect to the absolute reference triad of the vehicle O, X, Y and Z, on which the reflecting device, jointly connected to the frame 2 of the mirror, is installed.

The value of the three parameters $X_0$, $Y_0$ and $\gamma$ that define the combined rotary and translational motion of the local reference system with respect to the absolute system, as will be explained hereinafter, is calculated in the step for optimizing the mirror.

The surfaces 5 and 6 can, in a preferred embodiment, be of the aspherical anamorphic type such as the ones defined by the following relation (1):

$$z = \frac{c_x x^2 + c_y y^2}{1 + \sqrt{1 - k_x c_x^2 x^2 - k_y c_y^2 y^2}} +$$

$$+ \sum_{i=1}^{N} A_i \left[ (1 - B_i) x^2 + (1 + B_i) y^2 \right]^{i/2} \qquad (1)$$

where:

- x, y, z are the Cartesian coordinates that define the position of the generic point of the surface with respect to the vertex;
- $c_x$, $c_y$ are the curvatures according to the generatrices in the direction x and y;
- $k_x$, $k_y$ are the taper coefficients in the directions x and y;
- N is the maximum order of asphericity;
- $A_i$ are the aspherical coefficients related to the i-th order;
- $B_i$ represent the shape coefficients by means of which it is possible to make the i-th order more aspherical in one direction with respect to the other: in particular, if $B_i = 1$, the contribution of the direction x is nil, if $B_i = -1$ the contribution of the direction y is nil.

This relation (1) differs from the relation (2) that is known in the technical literature due to the fact that it takes into account not only the fourth, sixth, eighth and tenth order of asphericity, but also all the others, without limiting in any way the maximum order of asphericity, and also considers all the odd terms; in this manner it is possible to obtain a better correction of the optical aberrations of the mirror.

$$z = \frac{c_x x^2 + c_y y^2}{1 + \sqrt{1 - k_x c_x^2 x^2 - k_y c_y^2 y^2}} +$$
$$+ A_1 \left[ (1 - B_1) x^2 + (1 + B_1) y^2 \right]^2 +$$
$$+ A_2 \left[ (1 - B_2) x^2 + (1 + B_2) y^2 \right]^3 + \qquad (2)$$
$$+ A_3 \left[ (1 - B_3) x^2 + (1 + B_3) y^2 \right]^4 +$$
$$+ A_4 \left[ (1 - B_4) x^2 + (1 + B_4) y^2 \right]^5$$

Since the arrow z given by the relation (1) must be represented by a real number, the following condition also must be met:

$$(1 - B_i) x^2 + (1 + B_i) y^2 \geq 0 \qquad i = 1, 3, 5 \ldots \qquad (3)$$

The introduction of the odd terms does not entail problems in terms of ray tracing, since relation (1) is continuous and can be derived at least up to the partial first derivatives.

The only exception is constituted by the aspherical term of the first order, which has a discontinuity of the first derivatives at the vertex of the surface and must therefore be omitted if the vertex of the surface is not external to the contour of the mirror.

As an alternative, the surfaces 5 and 6 can be surfaces of the polynomial type, such as the ones defined by the following relation (4):

$$z = A_{00} + A_{10}x + A_{01}y +$$
$$+ A_{20}x^2 + A_{11}xy + A_{02}y^2 + ... =$$
$$= \sum_{i=0}^{Np}\sum_{j=0}^{Mp} A_{ij}x^i y^j \tag{4}$$

where:

- x, y, z are the Cartesian coordinates that define the position of the generic point of the surface with respect to the vertex;
- Np and Mp represent the maximum order of the polynomial function respectively in the direction x and y;

$A_{ij}$ are the coefficients of the polynomial function.

The polynomial relation (4) is continuous and derivable, since the indices i, j are positive integers; accordingly, ray tracing can be performed without particular difficulties.

The parameters that define the relation of the external surface 5 are generally different from the ones that define the internal surface 6 and the maximum order of asphericity N can also be different in relation (1) or the maximum order $N_p$ and Mp in relation (4) in the directions x and y.

The order N of each surface depends on the technical requirements and is not established beforehand but after numerical simulations.

Furthermore, since the first order tends to make the surface conical, generally it is not used, by forcing $A_1 = 0$.

A further alternative for forming the surfaces 5 and 6 consists in describing the surfaces 5 and 6 with relations that are equivalent to relation (1) or relation (4), which interpolate them with sufficient precision over all the necessary extension.

According to the present invention, the reflecting device 1, and in particular the monolithic body 4, can be provided by means of a production method, according to a block diagram generally designated by the reference numeral X, which comprises substantially the following steps:

- a step XI for preliminary setting of the radiuses of curvature $c_x$ and $c_y$ of relation (1) of the external surface 5 alone, and of all the other parameters that define fully the equation of the surface. In this initial step, the internal surface 6 is renounced and the external surface 5 is rendered reflective directly.
- a step XII for positioning in space the local reference system $X_{LI}$, $Y_{LI}$ and $Z_L$ with respect to the reference triad of the vehicle X, Y and Z as a function of ergonomic and design constraints of the vehicle, such as for example the placement of the driver's seat with respect to the coupling of the frame 2;

- a step XIII for measuring and calculating the field of vision of the reflecting device 1 as a function of the ergonomics and shape of the vehicle with the tracing of optical rays starting from the viewpoint of the driver, and the optical characteristics of said reflecting device 1;
- a step XIV for calculating the error function of the optical characteristics with respect to reference values;
- a step XV for correcting the first-try values as a function of the calculated error with respect to the reference values. In this step, as a function of the criticalities of the requirements, the convenience of the following is assessed:

- changing the maximum order N of asphericity of relation (1);
- shifting from the configuration with a single external reflecting surface to the one formed by two optical surfaces, the external one being refractive and the internal one being reflective;
- changing the mathematical formulation of the surface/surfaces, shifting for example from relation (1) to relation (4).

If the order N of asphericity is increased, the value in the coefficients $A_i$ and $B_i$ that have not yet been used must be set initially equal to zero or, if shifting to the configuration with two optical surfaces, the coefficients of the internal surface 6 are set initially equal to those of the external surface 5 and the value of the minimum thickness of the mirror, equal to the distance between the points $O_1$ and $O_2$ shown in Figure 1, is established. The minimum thickness of the monolithic body 4 depends on the minimum requirements set by the statutory provisions in force, on the mechanical characteristics of the material used, on the steps of the production process (molding by pressure injection-compression or casting for thermosetting materials) and on the dimensions (width, height) of the monolithic body 4 itself or, if one decides to change the equation of the surfaces, all the coefficients of the new equation/equations must be calculated in such a manner that the surfaces, on the basis of the new equations, remain as unchanged as possible with respect to before. The convenience of changing the equation of the surfaces arises from the fact that as a function of the specifications of the mirror one formulation can be more efficient from the numeric standpoint than another one.

- a step XVI for obtaining the monolithic body made of transparent plastic material by molding by pressure injection-compression or gravity casting;
- a step XVII for depositing a thin film of reflecting metal on the internal surface 6 or on the external surface 5 by deposition in high vacuum by vaporization and/or sputtering.

More precisely, step XI allows to calculate the value of the curvature $c_x$ of the external surface 5 that is needed to view the required horizontal object field. In this step, the curvature $c_y$ is equal to $c_x$, the taper coefficients $k_x$ and $k_y$ are equal to one, the order of asphericity N is nil; in other words, the anamorphic aspherical surface degenerates into a spherical surface.

In car mirrors, the larger dimension is the horizontal one, as shown in Figure 1, and the portion of mirror that is used most frequently is the central region 5a, because the upper region 15b views very distant cars, while the lower one 5c frames the road and is used only during maneuvering.

In this step XI, the axis of revolution is centered with respect to the central portion 5a that is considered, i.e., the off-center $y_0$ and the angle of rotation $\gamma$ are nil.

Accordingly, distortion in the horizontal direction is prevalent, while it tends to be nil in the vertical direction. This is the main cause of anamorphosis production, flattening the images in the horizontal direction; a spherical mirror in fact has a negative distortion, i.e., it tends to compress the image.

The method that will be described allows to calculate the optimum value of the curvature $c_y$ that reduces the anamorphosis of the image. A further reduction in anamorphosis is achieved during optimization of the surfaces, calibrating the coefficients $k_y$ and $B_i$ with respect to the coefficients $k_x$ and $A_i$. Depending on the requirements of the mirror and of the criticalities that occur during optimization, the curvature $c_y$ can remain constant together with the value of the curvature $c_x$.

As an alternative, only the initial ratio between $c_x$ and $c_y$ can remain constant or, especially in cases of great criticality with respect to achieving the requirements of the mirror, the curvature $c_x$ can vary independently of $c_y$ by sacrificing the correction of anamorphosis to the achievement of other more important targets, such as for example the field in a vertical direction.

The subsequent step of optimization of the coefficients of the surface/ surfaces of the mirror, i.e., of the coefficients $k_x$, $k_y$, $A_i$ and $B_i$, allows to reduce distortion considerably, especially in the central region already mentioned, but the differentiation between the two curvatures ensures in any case a better correction of the image, even if the final distortion is extremely small.

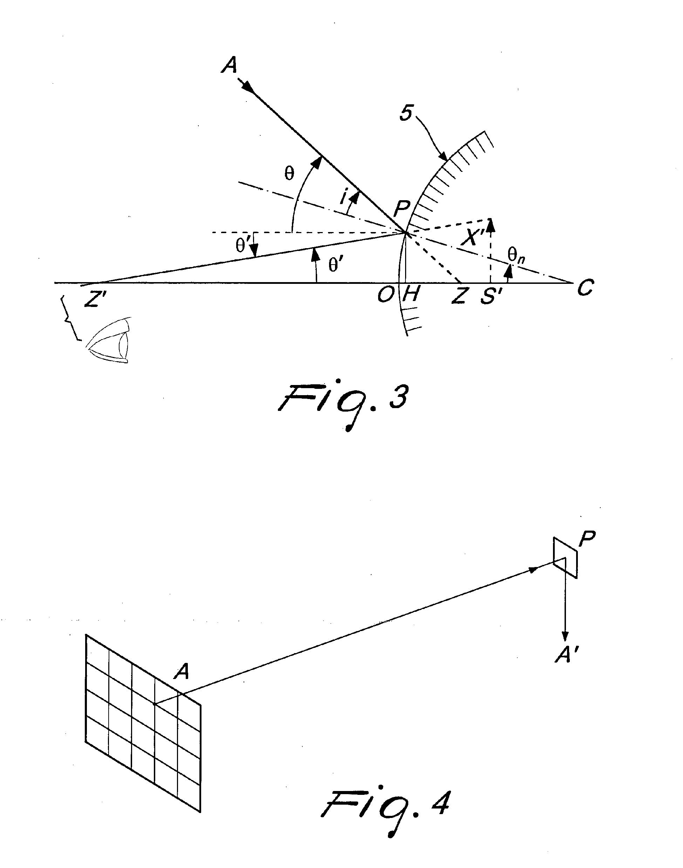

Figure 3 illustrates the tracing of a ray that is reflected on the outer surface 5 and passes through the center of the eye of the driver.

On the basis of simple geometric considerations, and basic optical relations, it is easy to obtain the following relations:

$$f_x = -\frac{R_x}{2} = -\frac{1}{2c_x} \tag{5}$$

$$I_{pup} = 1 - \frac{z'}{f_x} \tag{6}$$

$$z = \frac{z'}{I_{pup}} \tag{7}$$

$$s' = \frac{s\,f_x}{s + f_x} \tag{8}$$

$$X_{ogg} = \frac{(z - s)\,h}{z - R_x + \sqrt{R_x^2 - h^2}} \tag{9}$$

$$\vartheta = \arctan\left(\frac{X_{ogg}}{z - s}\right) \tag{10}$$

$$\vartheta_n = \arcsin\left(\frac{h}{R_x}\right) \tag{11}$$

$$x' = h + (-s' - OH)\tan\vartheta' = h - (s' + R_x + \sqrt{R_x^2 - h^2})\tan(\vartheta - 2\vartheta_n) \tag{12}$$

where:

- Z' is the position of the pupil of the eye, which constitutes the aperture diaphragm of the system;
- C is the center of curvature of the mirror;
- Z'C is the optical axis;
- Z is the position of the entry pupil;
- AZ is the entering ray, which is incident to the mirror in the point P;
- S' is the position of the image plane;
- z' = Z'O is the (positive) distance between the aperture diaphragm and the vertex of the surface;
- z = OZ is the (positive) distance between the vertex of the surface and the entry pupil;
- s is the (negative) distance between the vertex of the surface and the object plane;
- s' = OS' is the (negative) distance between the vertex of the surface and the image plane;
- $f_x$, $f_y$ is the focal length of the mirror respectively in the direction x and y;
- $R_x$, $R_y$ are the radiuses of curvature of the mirror respectively in the direction x and y;
- x' is the (positive) image height;
- $x_{ogg}$ is the (positive) object height;
- h = PH is the (positive) distance between the point of incidence and the optical axis;
- θ is the (positive) inclination of the incident ray with respect to the optical axis;
- θ' is the (positive) inclination of the reflected ray with respect to the optical axis;
- $θ_n$ is the (positive) inclination of the normal in the point of incidence.

If the values z', s and $X_{ogg}$ are known on the basis of the technical specifications of the mirror, and assuming a first-try value of the radius $R_x$, by means of relations (5), (6), (7) and (9) it is possible to verify whether the assumed value of the radius allows to view the required object field. If it does not, this value is modified until the correct value is determined. In this step, the incidence height h must be set equal to the width of the mirror.

Once the value of the radius $R_x$ and therefore of $c_x$ has been determined, it is possible to calculate the image height by means of the successive relations (10), (11) and (12). Relations (9), (10), (11) and (12) point out that the object height and the image height are both nonlinear functions of the incidence height h, and therefore that the image height x' also depends in a non-linear manner on the object height $X_{ogg}$.

This can be calculated by means of the relation (13) given hereinafter.

If instead the image formed by the mirror had no distortion, the image height would be proportional to the object height and the proportionality factor would be the magnification. Due to what was said earlier, it can be assumed with good approximation that this proportionality link exists in the vertical direction in the central portion 5a of the mirror, i.e., that relation (14) holds.

By differentiating relations (13) and (14), obtaining relations (15) and (16) hereinafter, it is possible to calculate the ratios between the horizontal and vertical dimensions of the object and of the image, which must be identical if the image must not be anamorphic (relations (17) and (18)). In particular, it is possible to obtain from relation (18) the magnification of the mirror in the vertical direction.

$$x' = g(X_{ogg})  \qquad (13)$$

$$y' = I_y Y_{ogg} \qquad (14)$$

$$dx' = \frac{\partial g}{\partial X_{ogg}} dX_{ogg} \qquad (15)$$

$$dy' = I_y dY_{ogg} \qquad (16)$$

$$\frac{dx'}{dy'} = \frac{\frac{\partial g}{\partial X_{ogg}}}{I_y} \frac{dX_{ogg}}{dY_{ogg}} \qquad (17)$$

$$\frac{dx'}{dy'} = \frac{dX_{ogg}}{dY_{ogg}} \Rightarrow \frac{\frac{\partial g}{\partial X_{ogg}}}{I_y} \frac{dX_{ogg}}{dY_{ogg}} = \frac{dX_{ogg}}{dY_{ogg}} \Rightarrow I_y = \frac{\partial g}{\partial X_{ogg}} \qquad (18)$$

Actually, it is not possible to calculate the magnification directly from relation (18), because the function $g(X_{ogg})$ is not known. However, relations (9), (10), (11) and (12) are known, and it is possible to obtain from them the expression of the two functions that link directly the object height and the image height to the incidence height h by means of relations (19) and (20).

By differentiating the relations (19) and (20) that follow, it is possible to obtain the derivative of the function g with respect to the object height, determining the relation (23) and therefore the magnification in the direction y. It is convenient to develop in Taylor series the relations (9), (10), (11) and (12) in order to attain a formulation of the relations (19) and (20) that is simpler from a mathematical standpoint. Omitting all the mathematical passages related to the series development, since these are procedures which are common in mathematical analysis, one obtains the following expressions:

$$X_{ogg} = g_1(h) \tag{19}$$

$$x' = g_2(h) \tag{20}$$

$$dX_{ogg} = \frac{\partial g_1}{\partial h} dh \tag{21}$$

$$dx' = \frac{\partial g_2}{\partial h} dh \tag{22}$$

$$\frac{\partial g}{\partial X_{ogg}} = \frac{dx'}{dX_{ogg}} = \frac{\frac{\partial g_2}{\partial h} dh}{\frac{\partial g_1}{\partial h} dh} = \frac{\frac{\partial g_2}{\partial h}}{\frac{\partial g_1}{\partial h}} \tag{23}$$

$$I_y = \frac{\frac{\partial g_2}{\partial h}}{\frac{\partial g_1}{\partial h}} \tag{24}$$

$$\xi = \frac{z}{R_x} \; ; \; \sigma = \frac{s}{R_x} \; ; \; \sigma' = \frac{s'}{R_x} \; ; \; \eta = \frac{h}{R_x} \tag{25}$$

$$X_{ogg} = 2R_x \frac{(\xi - \sigma)\eta}{2\xi - \eta^2} \tag{26}$$

$$x' = R_x \left\{ \eta - \frac{(2\sigma' + \eta^2)}{2} \frac{2(1 - 2\xi)\eta - 2(1 - \xi)\eta^3}{2\xi + (3 - 4\xi)\eta^2} \right\} \tag{27}$$

$$\frac{\partial g_1}{\partial h} = \frac{\partial X_{ogg}}{\partial h} = 2 \frac{2\xi^2 - 2\xi\sigma + (\xi - \sigma)\eta^2}{(2\xi - \eta^2)^2} \tag{28}$$

$$\frac{\partial g_2}{\partial h} = \frac{\partial x'}{\partial h} = 1 - \frac{(6\xi - 8\xi^2)\eta^2 + 2\sigma'\left[2\xi - 4\xi^2 + \eta^2(4\xi - 3)\right]}{\left[2\xi + (3 - 4\xi)\eta^2\right]^2} \qquad (29)$$

$$f_y = s\frac{I_y}{1 - I_y} \Rightarrow R_y = -2f_y \Rightarrow c_y = 1/R_y \qquad (30)$$

As a function of the type of mirror, it can be convenient to calculate relations (28), (29) and (30) not at the maximum value of the height h defined earlier, but at a smaller value $h_1$, such as to comply with the following relation:

$$0.5\ h \le h_1 \le h \qquad (30bis)$$

Having defined the initial values of the parameters of the external surface 5 according to the described method, the local reference triad $X_{L1}$, $Y_{L1}$ and $Z_L$ must be positioned with respect to the reference triad of the vehicle X, Y and Z, providing step XII.

The off-center $Y_0$ and the angle $\gamma$ have already been defined in the preceding step XI; for the off-center $X_0$, a value is chosen so that the following relation is met:

$$0 \le X_0 \le L/2 \qquad (31)$$

Each rear-view mirror is provided with an adjustment system, which is manual or operated electrically with two degrees of freedom, and consists of two angle adjustments, by means of which it is possible to modify its orientation so that every driver, regardless of his height and ergonomic habits, can view or frame correctly the field required by the directive currently in force.

The two adjustment angles $\alpha$ and $\beta$ shown in Figure 2, which can be defined both by a sequence of rotations about the axes of the triad that is coupled to the vehicle and by a sequence of rotations with respect to triads which are successively rotated with respect to each other, are determined uniquely on the basis of the field to be viewed or framed and of the three-dimensional position of the driver and of the mirror.

Since these angles are furthermore a function of the surfaces 5 and 6, they must be recalculated continuously during the steps of conception.

The subsequent steps XIII, XIV and XV are repeated iteratively during the step of optimization of the parameters that describe the surfaces of the mirror. For these steps it is necessary to use the methods for minimization of functions of multiple variables, which are available in every program for simulation of optical systems and in many calculation programs, such as for example Matlab, released by Math Works Inc., with registered office in Natick, Massachusetts, USA.

It is in fact advantageous to proceed in this manner because the number of variables is very large: example, each anamorphic aspherical surface described by relation (2) is a function of 4+2N parameters.

A mirror which has for example surfaces of the tenth order (i.e., with N = 10) has a total of forty-seven variables: if one excludes, due to what has been mentioned earlier, the first order of asphericity, in both surfaces there are in fact twenty-two variables for the external surface 5, twenty-two for the internal surface 6, two off-centers and the rotation of the local reference system with respect to the system that is coupled to the frame 2.

If instead a relation of the polynomial type has been chosen to define the surfaces 5 and 6, such as the one described by relation (4), each surface is a function of $N_P+1$ by $M_P+1$ parameters.

In order to generate a monolithic body 4 that has, for example, fourth-order surfaces in x and y (i.e., with $N_P = M_P = 4$), a total of fifty-three variables is required, of which twenty-five for the external surface 5, twenty-five for the internal surface 6, two off-centers and the rotation of the local reference system $X_i$, $Y_i$ and $Z_i$ or $X_e$, $Y_e$ and $Z_e$ with respect to the absolute triad $X_0$, $Y_0$ and $Z_0$ that is coupled to the frame 2 of the reflecting device 1.

In this manner, an incomplete polynomial of maximum order Np + Mp is obtained. For example, for Np = Mp = 4 the maximum-order term is $A_{44} x^4 y^4$, but all the homogeneous terms such as $A_{80} x^8$, $A_{71} x^7 y$, et cetera, are missing.

For this reason, it is generally convenient to define the maximum order of the polynomial, which is equal to:

$$N_{max} = max(N_p, M_p) \tag{32}$$

and limit accordingly the sum of the relation (4), including only the terms whose order is smaller than or equal to N.

In this manner, the variables are reduced significantly and the use of high-order terms, which, as is known, tend to oscillate, is limited.

Even working in this way, a fourth-order polynomial surface is defined by fifteen parameters and the monolithic body 4 is defined accordingly by thirty-three variables.

The optimization step is based on the following cycle of operations:

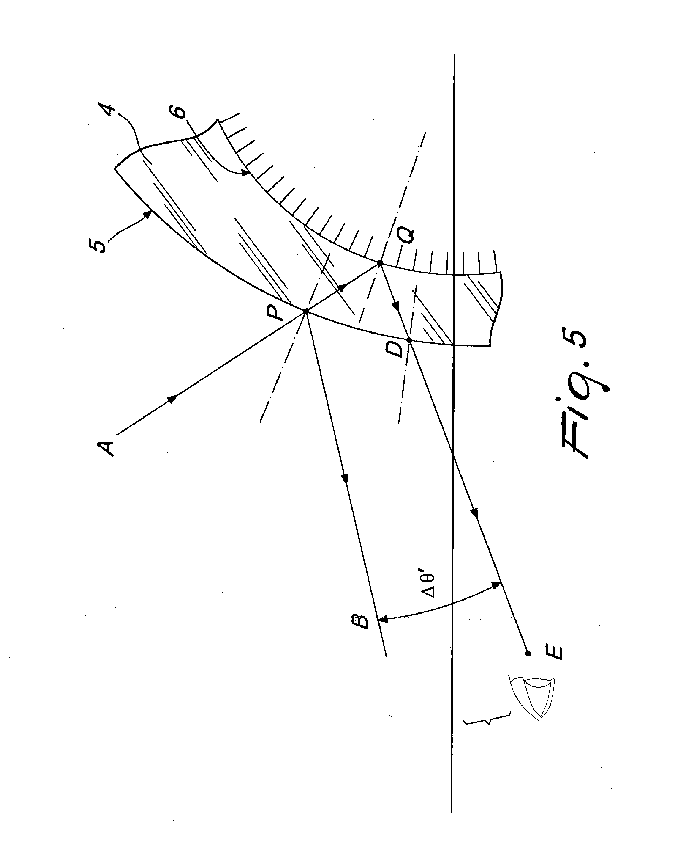

- definition of the field viewed by the mirror at one or more distances, established either on the basis of the directive in force, for example 20 m and 4 m, or of the standard of car manufacturers. To do this, it is necessary to trace the optical rays backward, starting from the viewpoint of the observer toward the object plane;
- definition of a series of points which are equidistant in the horizontal and vertical direction as shown in Figure 4, i.e., parallel respectively to the direction $X_o$ and $Y_o$ of the absolute triad of the vehicle. More precisely, the spacing of the points in the two directions does not have to be necessarily equal. In this manner, a uniform grid is obtained which constitutes a valid reference for assessing the optical performance of the monolithic body 4;
- ray tracing, starting from every object point thus defined which, by reflecting on the monolithic body 4, reach the eyes of the driver. As shown in Figure 5, a radius that starts from the object point A in fact is reflected on the mirror in the point P and reaches the eyes of the driver in A'. Since it is known that distortion and anamorphosis do not depend on the aperture of the optical system but only on the viewed field, it is sufficient to trace from each object point only the main ray that passes through the center of the aperture diaphragm, thus reducing calculation times significantly;

- reconstruction and analysis of the image that forms on the focal plane of the eyes, calculating for example the dimensions of a reference object, the distortion and anamorphosis, providing step 13;
- calculating the error function Φ, which must be minimized by means of relation (33).

The error function is defined by the weighted sum of the deviations between the current value $A_i$ of a parameter such as for example the distortion and the desired value $T_i$. In relation (33), $W_i$ is the weight of the i-th deviation; $N_F$ is the total number of deviations. In this manner, step 14 is performed. The function of the weights is dual: they allow to balance numerically the extent of the deviations between the current value of the generic parameter and the expected value, to avoid a numerically small deviation from becoming negligible within the error function. Furthermore, it is convenient to be able to direct the optimization process toward a solution that privileges the reduction of deviations of the more important parameters, giving them a greater weight than the less significant parameters.

$$\phi = \sum_{i=1}^{N_F} (T_i - A_i)^2 W_i \tag{33}$$

In order to minimize the error function, it is furthermore necessary to define:

- the set of independent variables, which is constituted by all the parameters needed to define uniquely the configuration of the mirror, i.e., the two off-centers and the angle $\gamma$ that define the combined rotary and translational motion of the local reference system with respect to the reference system O, Z, Y and Z that is coupled to the frame 2, and the coefficients of relations (2) or (4) that define the two surfaces 5 and 6;
- the lower limits, the upper limits and the Lagrange multipliers. The first two sets allow to control the value of the parameters that can be subjected to limitations for any reason: the size of the image, for example, is limited in a downward region by the need to provide the driver with a perception that is always clear and immediately recognizable of the viewed or framed field. The Lagrange multipliers allow instead to control the value of the dependent variables, which must be complied with precisely. For example, the viewed object field can be included in the definition of the error function if its value is still far from the desired one, but it can belong to the set of Lagrange multipliers in a more advanced step, when the desired value has by then been obtained and must be maintained until the end of the optimization step. Any limitations of the optical and/or geometric parameters that are provided by type-approval directives can be checked conveniently, according to the situations, in the lower limits, upper limits and in the Lagrange multipliers.

In the case of a mirror which comprises the refractive external surface 5 and the reflective internal surface 6, the optimization of the mirror itself requires control of the extent of the angular deviation between the direction of the main image and the direction of the image reflected directly by the external surface 5, constituted by the angle $\Delta\theta'$ in Figure 5. To ensure that the image reflected directly by the external surface 5 is superimposed on the main image, thus preventing the driver from perceiving an image doubling, the following relation, which ensures that the angular deviation is smaller than the maximum angular resolution of an average eye, must be verified:

$$\Delta\theta' \leq 1.5' = 0.025 \text{ deg} \qquad\qquad (34)$$

Relation (34) can for example be checked by entering it in the upper limits.

Once the independent variables, the error function and any sets of lower limits, upper limits and Lagrange multipliers have been defined, the optimization step 15 begins and consists in defining a new set of values of the independent variables, ensuring a reduction of the error function and a possible better compliance with the set limits.

The definition of the new value of the independent variables occurs by means of an iterative process, which is based on the logical specifications that have been implemented in the selected software, which for example, as already mentioned, can be provided by means of Matlab.

Having conceived the mathematical shape of the monolithic body 4 and therefore of the surfaces 5 and 6, one moves on to step 16 for obtaining the monolithic body 4 made of transparent plastic material by pressure injection-compression or gravity casting.

According to the invention, it is possible to use a mold obtained from the machining of two steel dies by means of a five-axis machining center; the surfaces are then polished to obtain a surface finish of the optical type.

Particular care must be taken during the polishing step in order to preserve the required shape precision, for example less than five thousandths of a millimeter, and the gloss of the surface in order to obtain the necessary transparency the molded surfaces.

The reflecting surface 5 or 6 is obtained by means of a step 17 of deposition of a thin film of reflective metal, typically aluminum, chromium, titanium or silver according to the requirements, by deposition in high vacuum by vaporization and/or sputtering.

The reflecting device according to the invention fully achieves the intended aim and objects, city since it has a wide viewing angle which is larger than that of devices without blind spots, facilitating maneuvers when stationary.

Another advantage of the reflecting device according to the invention consists in that it forms a single reflected image without significant deformations thereof, in compliance with the statutory provisions in force, ensuring better optical performance and contributing, from a production standpoint, to optimizing production costs by means of a reduction in thickness, maintaining it, for the entire length and width of the mirror, within a very small thickness variation range.

A further advantage of the reflecting device according to the invention consists in that it forms a single reflected image without significant optical deformations thereof, in compliance with the type-approval rules in force.

If the reflecting surface is the external one, since the light does not pass through the monolithic body, there is a series of advantages, among which:

- reduction of fixed production costs, because the optical finish of the internal surface 6 is not needed;
- reduction of variable costs, because the material used to provide the monolithic body of the mirror, by not being crossed by light, may be less valuable than the material that must be used to provide the mirror in the more general configuration;
- since the shape of the internal surface 6 is not relevant from an optical standpoint, it can be utilized to optimize the mounting of the mirror on the frame.

From the optical viewpoint, the general configuration, i.e., the one in which the internal surface 6 is reflective and the external one 5 is refractive, is instead more advantageous, because it is possible to utilize the refractive index of the material of which the mirror is made and it is possible to optimize the shape of the internal surface 6 in order to obtain a better optical performance.

All the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. MI2008A002132 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1. A reflecting device with wide viewing angle, low distortion and anamorphosis and reduced doubling of reflected images, particularly for vehicles, having a monolithic body (4) made of transparent plastic material and comprising an external surface (5) and an internal surface (6), said external surface (5) facing the objects to be detected and being arranged opposite said internal surface (6), said external surface (5) being formed by an anamorphic surface which is a non-revolution surface, said internal surface (6) and said external surface (5) having the optical axis ($Z_L$) in common and being defined by mathematical relations which refer respectively to local reference systems ($O_1$, $X_{L1}$, $Y_{L1}$, $Z_L$ and $O_2$, $X_{L2}$, $Y_{L2}$, $Z_L$) which undergo a combined rotary and translational motion with respect to the reference system of the vehicle ($X_o$, $Y_o$) on which the reflecting device (1) is installed, **characterized in that**:

   at least said external surface (5) is of the anamorphic aspherical type and is defined by the following relation:

$$z = \frac{c_x x^2 + c_y y^2}{1 + \sqrt{1 - k_x c_x^2 x^2 - k_y c_y^2 y^2}} +$$
$$+ \sum_{i=1}^{N} A_i \left[ (1 - B_i) x^2 + (1 + B_i) y^2 \right]^{i/2} \tag{1}$$

   where:

   - x, y, z are the Cartesian coordinates that define the position of the generic point of the surface with respect to the vertex;
   - $c_x$, $c_y$ are the curvatures according to the generatrix in the direction x and y;
   - $k_x$, $k_y$ are the taper coefficients in the directions x and y;
   - N is the maximum order of asphericity;
   - $A_i$ are the aspherical coefficients related to the i-th order;
   - $B_i$ represent the shape coefficients by means of which it is possible to make the i-th order more aspherical in one direction with respect to the other: in particular, if $B_i = 1$, the contribution of the direction x is nil, if $B_i = -1$ the contribution of the direction y is nil; or
   said external surface (5) is of the polynomial type and is defined by the relation:

$$z = A_{00} + A_{10} x + A_{01} y +$$
$$+ A_{20} x^2 + A_{11} xy + A_{02} y^2 + \ldots =$$
$$= \sum_{i=0}^{Np} \sum_{j=0}^{Mp} A_{ij} x^i y^j \tag{4}$$

   where:

   - x, y, z are the Cartesian coordinates that define the position of the generic point of the surface with respect to the vertex;
- Np and $M_p$ represent the maximum order of the polynomial function respectively in the direction x and y;
$A_{ij}$ are the coefficients of the polynomial function.

2. The device according to claim 1, **characterized in that** said internal surface (6) is formed by an anamorphic surface which is a non-revolution surface.

3. The device according to claim 1, **characterized in that** said internal surface (6) is of the anamorphic aspherical type and is defined by the relation:

$$z = \frac{c_x x^2 + c_y y^2}{1 + \sqrt{1 - k_x c_x^2 x^2 - k_y c_y^2 y^2}} + $$
$$+ \sum_{i=1}^{N} A_i \left[ (1 - B_i) x^2 + (1 + B_i) y^2 \right]^{i/2} \qquad (1)$$

where:

- x, y, z are the Cartesian coordinates that define the position of the generic point of the surface with respect to the vertex;
- $c_x$, $c_y$ are the radiuses of curvature according to the generatrix in the direction x and y;
- $k_x$, $k_y$ are the taper coefficients in the directions x and y;
- N is the maximum order of asphericity;
- $A_i$ are the aspherical coefficients related to the i-th order;
- $B_i$ represent the shape coefficients by means of which it is possible to make the i-th order more aspherical in one direction with respect to the other: in particular, if $B_i = 1$, the contribution of the direction x is nil, if $B_i = -1$, the contribution of the direction y is nil.

4. The device according to claim 1, **characterized in that** said internal surface (6) is of the polynomial type and is defined by the relation:

$$z = A_{00} + A_{10} x + A_{01} y + $$
$$+ A_{20} x^2 + A_{11} xy + A_{02} y^2 + ... = $$
$$= \sum_{i=0}^{Np} \sum_{j=0}^{Mp} A_{ij} x^i y^j \qquad (4)$$

where:

- x, y, z are the Cartesian coordinates that define the position of the generic point of the surface with respect to the vertex;
- $N_p$ and $M_p$ represent the maximum order of the polynomial function respectively in the direction x and y;
$A_{ij}$ are the coefficients of the polynomial function.

5. The device according to one or more of the preceding claims, **characterized in that** said internal surface (6) and said external surface (5) are respectively of the reflective type and of the refractive type.

**6.** The device according to one or more of claims 1 to 4, **characterized in that** said external surface (5) is of the reflective type.

**7.** The device according to one or more of the preceding claims, **characterized in that** said monolithic body (4) is made of thermoplastic material with high-level light transmission.

**8.** The device according to one or more of claims 1 to 6, **characterized in that** said monolithic body (4) is made of thermosetting materials.

**9.** The device according to claim 7 or 8, **characterized in that** it comprises a thin film of reflective metal that is deposited on said internal surface (6) or on said external surface (5) by means of high-vacuum deposition by vaporization and/or sputtering.

**10.** A method for providing a reflecting device with a wide viewing angle (reduced distortion and anamorphosis and reduced doubling of reflected images) particularly for vehicles, comprising
at least one step (XI) for defining the type of mathematical relations that define the shape of the surfaces of a monolithic body (4) that constitutes the reflecting device (1) and comprising an internal surface (6) and an external surface (5),
a step (XII) for positioning in space the local reference systems ($X_i$, $Y_i$, $Z_i$ and $X_e$, $Y_e$, $Z_e$), respectively, of said internal surface (6) and said external surface (5) with respect to the reference system of the vehicle ($X_o$, $Y_o$) on which the reflecting device (1) is installed as a function of ergonomic and design constraints of said vehicle, said internal surface (6) and said external surface (5) having the optical axis in common,
a step (XIII) for measuring and calculating the field of vision of said reflecting device (1) as a function of the ergonomics and shape of the vehicle by optical ray tracing starting from the viewpoint of the driver and of the optical characteristics of said reflecting device (1), said measurement and calculation step (XIII) being performed after said positioning step (XII), and
a step (XIV) for calculating the error function of said optical characteristics with respect to reference values, said calculation step (XIV) being performed after said measurement and calculation step (XIII).

**11.** The method according to claim 10, further comprising a step (XV) for correcting said first-try values as a function of the calculated error with respect to said reference values, said correction step (XV) being performed after said calculation step (XIV) and before said definition step (XI).

**12.** The method according to claim 11, further comprising a step (XVI) for obtaining said monolithic body (4) made of transparent plastic material by molding by pressure injection-compression or gravity casting, said obtainment step (XVI) being performed after said calculation step (XIV).

**13.** The method according to claim 12, further comprising a step (XVII) for depositing a thin film of reflective metal on said internal surface (6) or on said external surface (5) by means of deposition in high vacuum by vaporization and/or sputtering, said deposition step (XVII) being performed after said obtainment step (XVI).

**Patentansprüche**

**1.** Eine Reflektiervorrichtung mit weitem Betrachtungswinkel, geringer Verzerrung und Anamorphose und verringerter Dopplung reflektierter Bilder, insbesondere für Fahrzeuge, die einen monolithischen Körper (4) aus transparentem Kunststoffmaterial hat und eine äußere Oberfläche (5) und eine innere Oberfläche (6) umfasst, wobei die äußere Oberfläche (5) den zu erfassenden Objekten zugewandt und gegenüber der inneren Oberfläche (6) angeordnet ist, wobei die äußere Oberfläche (5) von einer anamorphotischen Oberfläche gebildet wird, die eine umdrehungsfreie Oberfläche ist, und die innere Oberfläche (6) und die äußere Oberfläche (5) die optische Achse ($Z_L$) gemeinsam haben und durch mathematische Beziehungen bestimmt werden, die sich jeweils auf lokale Referenzsysteme ($O_1$, $X_{L1}$, $Y_{L1}$, $Z_L$ und $O_2$, $X_{L2}$, $Y_{L2}$, $Z_L$) beziehen, welche eine kombinierte Dreh- und Translationsbewegung mit Bezug auf das Referenzsystem des Fahrzeugs ($X_O$, $Y_O$) durchführen, auf dem die Reflektiervorrichtung (1) installiert ist, **dadurch gekennzeichnet, dass**:

zumindest die äußere Oberfläche (5) vom anamorphotischen asphärischen Typ ist und durch folgende Beziehung bestimmt wird:

$$z = \frac{c_x x^2 + c_y y^2}{1 + \sqrt{1 - k_x c_x^2 x^2 - k_y c_y^2 y^2}} +$$
$$+ \sum_{i=1}^{N} A_i \left[(1 - B_i)x^2 + (1 + B_i)y^2\right]^{i/2} \tag{1}$$

worin:

- x, y, z die kartesischen Koordinaten sind, die die Position des generellen Punktes der Oberfläche im Verhältnis zum Scheitelpunkt bestimmen;
- $c_x$, $c_y$ die Krümmungen entsprechend der Generatrix in der Richtung x und y sind;
- $k_x$, $k_y$ die Konizitäts-Koeffizienten in den Richtungen x und y sind;
- N die maximale Ordnung asphärischer Form ist;
- $A_i$ die asphärischen Koeffizienten, bezogen auf die i-te Ordnung, sind;
- $B_i$ für die Formkoeffizienten steht, mit denen es möglich ist, die i-te Ordnung in einer Richtung stärker asphärisch zu machen als in der anderen; im Speziellen ist, wenn $B_i$ = 1, der Beitrag der Richtung x gleich null; wenn $B_i$ = -1, ist der Beitrag der Richtung y gleich null; oder

die äußere Oberfläche (5) vom polynomischen Typ ist und durch folgende Beziehung definiert wird:

$$z = A_{00} + A_{10}x + A_{01}y +$$
$$+ A_{20}x^2 + A_{11}xy + A_{02}y^2 + ... =$$
$$= \sum_{i=0}^{N_P} \sum_{j=0}^{M_P} A_{ij} x^i y^j \tag{4}$$

worin:

- x, y, z die kartesischen Koordinaten sind, die die Position des generellen Punktes der Oberfläche im Verhältnis zum Scheitelpunkt bestimmen;
- $N_P$ und $M_P$ für die maximale Ordnung der polynomischen Funktion in die Richtung x beziehungsweise y stehen; $A_{ij}$ die Koeffizienten der polynomischen Funktion sind.

2. Die Vorrichtung gemäß Anspruch 1, **dadurch gekennzeichnet, dass** die innere Oberfläche (6) von einer anamorphotischen Oberfläche gebildet wird, die eine umdrehungsfreie Oberfläche ist.

3. Die Vorrichtung gemäß Anspruch 1, **dadurch gekennzeichnet, dass** die innere Oberfläche (6) vom anamorphotischen asphärischen Typ ist und durch folgende Beziehung definiert wird:

$$z = \frac{c_x x^2 + c_y y^2}{1 + \sqrt{1 - k_x c_x^2 x^2 - k_y c_y^2 y^2}} +$$
$$+ \sum_{i=1}^{N} A_i \left[(1 - B_i)x^2 + (1 + B_i)y^2\right]^{i/2} \tag{1}$$

worin:

- x, y, z die kartesischen Koordinaten sind, die die Position des allgemeinen Punktes der Oberfläche im Verhältnis zum Scheitelpunkt definieren;
- $c_x$, $c_y$ die Krümmungsradien entsprechend der Generatrix in der Richtung x und y sind;

- $k_x$, $k_y$ die Konizitäts-Koeffizienten in den Richtungen x und y sind;
- N die maximale Ordnung asphärischer Form ist;
- $A_i$ die asphärischen Koeffizienten, bezogen auf die i-te Ordnung, sind;
- $B_i$ für die Formkoeffizienten steht, mit denen es möglich ist, die i-te Ordnung in einer Richtung stärker asphärisch zu machen als in der anderen; im Speziellen ist, wenn $B_i = 1$, der Beitrag der Richtung x gleich null; wenn $B_i = -1$, ist der Beitrag der Richtung y gleich null.

4. Die Vorrichtung gemäß Anspruch 1, **dadurch gekennzeichnet, dass** die innere Oberfläche (6) vom polynomischen Typ ist und durch folgende Beziehung definiert wird:

$$z = A_{00} + A_{10}x + A_{01}y +$$
$$+ A_{20}x^2 + A_{11}xy + A_{02}y^2 + ... =$$
$$= \sum_{i=0}^{N_P} \sum_{j=0}^{M_P} A_{ij}x^i y^j \qquad (4)$$

worin:

- x, y, z die kartesischen Koordinaten sind, die die Position des generellen Punktes der Oberfläche im Verhältnis zum Scheitelpunkt bestimmen;
- $N_P$ und $M_P$ für die maximale Ordnung der polynomischen Funktion in die Richtung x beziehungsweise y stehen; $A_{ij}$ die Koeffizienten der polynomischen Funktion sind.

5. Die Vorrichtung gemäß einem oder mehreren der obigen Ansprüche, **dadurch gekennzeichnet, dass** die innere Oberfläche (6) und die äußere Oberfläche (5) vom Reflexionsbeziehungsweise vom Brechungstyp sind.

6. Die Vorrichtung gemäß einem oder mehreren der Ansprüche 1 bis 4, **dadurch gekennzeichnet, dass** die äußere Oberfläche (5) vom Reflexionstyp ist.

7. Die Vorrichtung gemäß einem oder mehreren der obigen Ansprüche, **dadurch gekennzeichnet, dass** der monolithische Körper (4) aus thermoplastischem Material mit hoher Lichtdurchlässigkeit besteht.

8. Die Vorrichtung gemäß einem oder mehreren der Ansprüche 1 bis 6, **dadurch gekennzeichnet, dass** der monolithische Körper (4) aus wärmehärtbaren Materialien besteht.

9. Die Vorrichtung gemäß Anspruch 7 oder 8, **dadurch gekennzeichnet, dass** sie einen dünne Schicht von reflektierendem Metall umfasst, die durch Hochvakuum-Ablagerung mit Hilfe von Verdampfung und/oder Vakuumzerstäuben auf die innere Oberfläche (6) oder die äußere Oberfläche (5) aufgetragen wird.

10. Ein Verfahren zur Bereitstellung einer reflektierenden Vorrichtung mit weitem Betrachtungswinkel (geringer Verzerrung und Anamorphose und verringerter Dopplung reflektierter Bilder), insbesondere für Fahrzeuge, das Folgendes umfasst:

mindestens einen Schritt (XI) zur Bestimmung der Art mathematischer Beziehungen, die die Form der Oberflächen eines monolithischen Körpers (4) bestimmen, welcher die reflektierende Vorrichtung (1) bildet, und eine innere Oberfläche (6) und eine äußere Oberfläche (5) umfassend,

einen Schritt (XII) zur Positionierung der lokalen Referenzsysteme ($X_i$, $Y_i$, $Z_i$ und $X_e$, $Y_e$, $Z_e$) der inneren Oberfläche (6) beziehungsweise der äußeren Oberfläche (5) im Raum mit Bezug auf das Referenzsystem des Fahrzeugs ($X_o$, $Y_o$), auf dem die reflektierende Vorrichtung (1) installiert ist, in Abhängigkeit von ergonomischen und konstruktionsbedingten Beschränkungen des Fahrzeugs, wobei die innere Oberfläche (6) und die äußere Oberfläche (5) die optische Achse gemeinsam haben,

einen Schritt (XIII) zur Messung und Berechnung des Bildfelds der reflektierenden Vorrichtung (1) in Abhängigkeit von der Ergonomie und Form des Fahrzeugs durch Verfolgung des optischen Strahlengangs, ausgehend vom Blickpunkt des Fahrers und von den optischen Eigenschaften der reflektierenden Vorrichtung (1), wobei der Messungs- und Berechnungsschritt (XIII) nach dem Positionierschritt (XII) durchgeführt wird, und

einen Schritt (XIV) zur Berechnung der Fehlerfunktion der optischen Eigenschaften mit Bezug auf Referenzwerte, wobei der Berechnungsschritt (XIV) nach dem Messungs- und Berechnungsschritt (XIII) durchgeführt wird.

**11.** Das Verfahren gemäß Anspruch 10, das weiter einen Schritt (XV) zur Korrektur der Werte des ersten Versuchs in Abhängigkeit vom berechneten Fehler mit Bezug auf die Referenzwerte umfasst, wobei der Korrekturschritt (XV) nach dem Berechnungsschritt (XIV) und vor dem Bestimmungsschritt (XI) durchgeführt wird.

**12.** Das Verfahren gemäß Anspruch 11, das weiter einen Schritt (XVI) zur Gewinnung des monolithischen Körpers (4) umfasst, der durch Formen durch Druckeinspritzung-Kompression oder Kokillenguss aus transparentem Kunststoffmaterial hergestellt wird, wobei der Gewinnungsschritt (XVI) nach dem Berechnungsschritt (XIV) durchgeführt wird.

**13.** Das Verfahren gemäß Anspruch 12, das weiter einen Schritt (XVII) zur Ablagerung einer dünnen Schicht von reflektierendem Metall auf die innere Oberfläche (6) oder auf die äußere Oberfläche (5) durch Hochvakuum-Ablagerung mit Hilfe von Verdampfung und/oder Vakuumzerstäuben umfasst, wobei der Ablagerungsschritt (XVII) nach dem Gewinnungsschritt (XVI) durchgeführt wird.

**Revendications**

**1.** Dispositif réfléchissant avec grand angle de vision, à distorsion et anamorphose réduites et à doublage réduit d'images réfléchies, destiné en particulier à des véhicules, comportant un corps monolithique (4) réalisé dans une matière plastique transparente et comprenant une surface externe (5) et une surface interne (6), ladite surface externe (5) faisant face aux objets devant être détectés et étant agencée en face de ladite surface interne (6), ladite surface externe (5) étant formée par une surface d'anamorphose qui est une surface sans révolution, ladite surface interne (6) et ladite surface externe (5) ayant l'axe optique ($Z_L$) en commun et étant définies par des relations mathématiques qui renvoient respectivement à des systèmes de référence locaux ($O_1$, $X_{L1}$, $Y_{L1}$, $Z_L$ et $O_2$, $X_{L2}$, $Y_{L2}$, $Z_L$) qui effectuent un mouvement combiné de rotation et de translation par rapport au système de référence du véhicule ($X_0$, Yo) sur lequel le dispositif réfléchissant (1) est installé, **caractérisé en ce que** :

au moins ladite surface externe (5) est du type anamorphoseur asphérique et est définie par la relation suivante :

$$z = \frac{c_x x^2 + c_y y^2}{1 + \sqrt{1 - k_x c_x^2 x^2 - k_y c_y^2 y^2}} +$$

$$+ \sum_{i=1}^{N} A_i \left[ (1 - B_i) x^2 + (1 + B_i) y^2 \right]^{i/2} \qquad (1)$$

où :

- x, y, z sont les coordonnées cartésiennes qui définissent la position du point générique de la surface par rapport au sommet ;
- $c_x$, $c_y$ sont les courbures selon la génératrice dans la direction x et y ;
- $k_x$, $k_y$ sont les coefficients de conicité dans les directions x et y ;
- N est l'ordre maximal d'asphéricité ;
- Ai sont les coefficients d'asphéricité liés au $i^{ème}$ ordre ;
- Bi représentent les coefficients de forme grâce auxquels il est possible de rendre le $i^{ème}$ ordre plus asphérique dans une direction que dans l'autre : en particulier, si $B_i = 1$, la contribution de la direction x est nulle, si $B_i = -1$ la contribution de la direction y est nulle ; ou
ladite surface externe (5) est du type polynôme et est définie par la relation :

$$z = A_{00} + A_{10}x + A_{01}y +$$

$$+ A_{20}x^2 + A_{11}xy + A_{02}y^2 + ... =$$

$$= \sum_{i=0}^{Np} \sum_{j=0}^{Mp} A_{ij} x^i y^j \qquad (4)$$

où :

- x, y, z sont les coordonnées cartésiennes qui définissent la position du point générique de la surface par rapport au sommet ;
- $N_p$ et $M_p$ représentent l'ordre maximal de la fonction polynôme respectivement dans la direction x et y ;
$A_{ij}$ sont les coefficients de la fonction polynôme.

2. Dispositif selon la revendication 1, **caractérisé en ce que** ladite surface interne (6) est formée par une surface d'anamorphose qui est une surface sans révolution.

3. Dispositif selon la revendication 1, **caractérisé en ce que** ladite surface interne (6) est du type anamorphoseur asphérique et est définie par la relation :

$$z = \frac{c_x x^2 + c_y y^2}{1 + \sqrt{1 - k_x c_x^2 x^2 - k_y c_y^2 y^2}} +$$

$$+ \sum_{i=1}^{N} A_i \left[ (1 - B_i)x^2 + (1 + B_i)y^2 \right]^{i/2} \qquad (1)$$

où :

- x, y, z sont les coordonnées cartésiennes qui définissent la position du point générique de la surface par rapport au sommet ;
- $c_x$, $c_y$ sont les rayons de courbure selon la génératrice dans la direction x et y ;
- $k_x$, $k_y$ sont les coefficients de conicité dans les directions x et y ;
- N est l'ordre maximal d'asphéricité ;
- Ai sont les coefficients d'asphéricité liés au i[ème] ordre ;
- Bi représentent les coefficients de forme grâce auxquels il est possible de rendre le i[ème] ordre plus asphérique dans une direction que dans l'autre : en particulier, si Bi = 1, la contribution de la direction x est nulle, si $B_i$ = -1 la contribution de la direction y est nulle.

4. Dispositif selon la revendication 1, **caractérisé en ce que** ladite surface interne (6) est du type polynôme et est définie par la relation :

$$z = A_{00} + A_{10}x + A_{01}y +$$

$$+ A_{20}x^2 + A_{11}xy + A_{02}y^2 + ... =$$

$$= \sum_{i=0}^{Np} \sum_{j=0}^{Mp} A_{ij} x^i y^j \qquad (4)$$

où :

- x, y, z sont les coordonnées cartésiennes qui définissent la position du point générique de la surface par rapport au sommet ;
- $N_p$ et $M_p$ représentent l'ordre maximal de la fonction polynôme respectivement dans la direction x et y ;
$A_{ij}$ sont les coefficients de la fonction polynôme.

5. Dispositif selon l'une quelconque des revendications précédentes, **caractérisé en ce que** ladite surface interne (6) et ladite surface externe (5) sont respectivement du type réfléchissant et du type réfringent.

6. Dispositif selon une ou plusieurs des revendications 1 à 4, **caractérisé en ce que** ladite surface externe (5) est du type réfléchissant.

7. Dispositif selon une ou plusieurs des revendications précédentes, **caractérisé en ce que** ledit corps monolithique (4) est réalisé dans un matériau thermoplastique doté d'un niveau élevé de transmission de la lumière.

8. Dispositif selon une ou plusieurs des revendications 1 à 6, **caractérisé en ce que** ledit corps monolithique (4) est réalisé dans des matériaux thermodurcissables.

9. Dispositif selon la revendication 7 ou 8, **caractérisé en ce qu'**il comprend une fine pellicule de métal réfléchissant qui est déposée sur ladite surface interne (6) ou sur ladite surface externe (5) au moyen d'un dépôt sous vide poussé par vaporisation et/ou par pulvérisation.

10. Procédé de fourniture d'un dispositif réfléchissant avec grand angle de vision (distorsion et anamorphose réduites et doublage réduit des images réfléchies) destiné en particulier à des véhicules, comprenant
au moins une étape (XI) pour définir le type de relations mathématiques qui définissent la forme des surfaces d'un corps monolithique (4) qui constitue le dispositif réfléchissant (1) et qui comprend une surface interne (6) et une surface externe (5),
une étape (XII) pour positionner dans l'espace les systèmes de référence locaux ($X_i$, Yi, Zi et $X_e$, $Y_e$, $Z_e$), respectivement, de ladite surface interne (6) et de ladite surface externe (5) par rapport au système de référence du véhicule (($X_0$, Yo) sur lequel le dispositif réfléchissant (1) est installé en fonction des contraintes d'ergonomie et de conception dudit véhicule, ladite surface interne (6) et ladite surface externe (5) ayant l'axe optique en commun,
une étape (XIII) pour mesurer et calculer le champ de vision dudit dispositif réfléchissant (1) en fonction de l'ergonomie et de la forme du véhicule par lancer de rayon optique en partant du point de vue du conducteur et des caractéristiques optiques dudit dispositif réfléchissant (1), ladite étape de mesure et de calcul (XIII) étant effectuée après ladite étape de positionnement (XII), et
une étape (XIV) pour calculer la fonction d'erreur desdites caractéristiques optiques par rapport à des valeurs de référence, ladite étape de calcul (XIV) étant effectuée après ladite étape de mesure et de calcul (XIII).

11. Procédé selon la revendication 10, comprenant en outre une étape (XV) pour corriger lesdites valeurs de premier essai en fonction de l'erreur calculée par rapport auxdites valeurs de référence, ladite étape de correction (XV) étant effectuée après ladite étape de calcul (XIV) et avant ladite étape de définition (XI).

12. Procédé selon la revendication 11, comprenant en outre une étape (XVI) pour obtenir ledit corps monolithique (4) réalisé dans une matière plastique transparente par moulage par injection sous pression-compression ou par coulée par gravité, ladite étape d'obtention (XVI) étant effectuée après ladite étape de calcul (XIV).

13. Procédé selon la revendication 12, comprenant en outre une étape (XVII) pour déposer une fine pellicule de métal réfléchissant sur ladite surface interne (6) ou sur ladite surface externe (5) au moyen d'un dépôt sous vide poussé par vaporisation et/ou par pulvérisation, ladite étape de dépôt (XVII) étant effectuée après ladite étape d'obtention (XVI).

*Fig. 1*

*Fig. 2*

*Fig.3*

*Fig.4*

Fig. 5

```
┌─────────────────────────┐
│   STEP FOR DEFINING     │  ──XI
│      THE TYPE OF        │
│ MATHEMATICAL RELATIONS  │
│ THAT DEFINE THE SHAPE OF│
│   THE MONOLITHIC BODY   │
└─────────────────────────┘
            │
            ▼
┌─────────────────────────┐
│   STEP FOR POSITIONING  │  ──XII
│      THE MONOLITHIC     │
│      BODY IN SPACE      │
└─────────────────────────┘
            │
            ▼
┌─────────────────────────┐      ┌─────────────────────────┐
│  STEP FOR MEASURING AND │      │       STEP FOR          │
│  CALCULATING THE FIELD  │──XIII│   CORRECTING THE        │
│     OF VISION OF THE    │      │   FIRST-TRY VALUES      │
│    REFLECTING DEVICE    │      └─────────────────────────┘
└─────────────────────────┘                  XV
            │
            ▼
┌─────────────────────────┐
│  STEP FOR CALCULATING   │
│   THE ERROR FUNCTION    │──XIV
└─────────────────────────┘
            │
            ▼
┌─────────────────────────┐
│   STEP FOR OBTAINING    │──XVI
│   THE MONOLITHIC BODY   │
└─────────────────────────┘
            │
            ▼
┌─────────────────────────┐
│   STEP FOR DEPOSITING   │──XVII
│   THE THIN FILM OF      │
│   REFLECTIVE METAL      │
└─────────────────────────┘
```

X

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7025469 B
- EP 1759925 A

- IT MI20082132 A